# EUROPEAN PATENT SPECIFICATION

(11) **EP 2 328 418 B1**
(45) Date of publication and mention of the grant of the patent: **25.10.2017**
(21) Application number: 08787455.8
(22) Date of filing: 26.08.2008
(51) Int. Cl.: A23L 29/256, A23L 7/109, A23P 20/00, A23L 7/113

(54) **A METHOD OF REDUCING THE ENZYMATIC DIGESTION RATES OF STARCH GRANULES IN FOOD AND FOOD PRODUCTS PRODUCED THEREFROM**
VERFAHREN ZUM ERNIEDRIGEN DER ENZYMATISCHEN VERDAUUNGSRATEN VON STÄRKEKÖRNERN IN NAHRUNGSMITTELN UND DARAUS ERZEUGTEN NAHRUNGSMITTELPRODUKTEN
PROCÉDÉ DE RÉDUCTION DES VITESSES DE DIGESTION ENZYMATIQUE DE GRANULÉS D'AMIDON DANS UN ALIMENT ET PRODUITS ALIMENTAIRES PRODUITS À PARTIR DE CELUI-CI

(43) Date of publication of application: 08.06.2011
(73) Proprietor: Nestec S.A., 1800 Vevey (CH)
(72) Inventor: FOO, Check Woo, Singapore 610333 (SG); KASAPIS, Stefan, Singapore 129790 (SG); KOH, Lee Wah, Singapore 160131 (SG); JIANG, Bin, Singapore 271020 (SG)
(74) Representative: Mollet, Beat Max
(86) International application number: PCT/EP2008/061103
(87) International publication number: WO 2010/022764

(56) References cited:
- EP-A1- 0 105 100
- EP-A1- 0 749 697
- EP-A1- 0 927 520
- WO-A1-2008/037576
- US-A- 5 795 606
- US-B1- 6 242 032
- MIZUNO H ET AL: "MANNURONIC-ACID TO GULURONIC-ACID RATIOS OF ALGINIC ACIDS PREPARED FROM VARIOUS BROWN SEAWEEDS" NIPPON SUISAN GAKKAISHI - BULLETIN OF THE JAPANESE SOCIETY OFSCIENTIFIC FISHERIES, NIPPON SUISAN GAKKAI, TOKYO, JP, vol. 49, no. 10, 1 January 1983 (1983-01-01), pages 1591-1594, XP009108459 ISSN: 0021-5392
- DATABASE FSTA [Online] INTERNATIONAL FOOD INFORMATION SERVICE (IFIS), FRANkFURT-MAIN, DE; MITCHELL J R ET AL: "Rheological properties of alginate gels." XP002530398 Database accession no. 77-1-05-t0265 -& JOURNAL OF TEXTURE STUDIES, vol. 7, no. 2, 1975, pages 219-234, XP002537685 1976 FOOD SCI. LAB., DEP. OF APPLIED BIOCHEM. & NUTR., UNIV. OF NOTTINGHAM, SCHOOL OF AGRIC., SUTTON BONINGTON, LOUGHBOROUGH, LEICS. LE12 5RD, UK
- DRAGET K I ET AL: "Similarities and differences between alginic acid gels and ionically crosslinked alginate gels" FOOD HYDROCOLLOIDS, ELSEVIER, vol. 20, no. 2-3, 1 March 2006 (2006-03-01), pages 170-175, XP025152376 ISSN: 0268-005X [retrieved on 2006-03-01]

## Description

### Field of Invention

The present invention relates to a method of reducing the enzymatic digestion rates of starch granules in rice-based food, by encapsulating the starch granules with a reaction compound obtainable from the chemical reaction of a crosslinkable alginate that has been pre-mixed with food ingredients, and a crosslinking calcium containing solution. The invention also relates to a product obtained by the method of the present invention. The invention is defined as set forth in the claims.

### Background of the Invention

Wheat has been reported as the second most produced food among the cereal crops after maize. Wheat is being used to make flour for bread, cookies, cake, pasta, noodle and it can be fermented to make beer or wine. However, wheat or wheat-derived products are not suitable for celiac patients who are intolerant to gluten found in wheat.

Another cereal crop that is often used to produce food products and can be used to replace wheat is rice. The composition of rice varies with climate and variety but in any event starch is usually the major component in rice. Starch is a polysaccharide consists of a large number of glucose monosaccharide units bound together. In general, milled rice consists of 78% starch, 7% protein, 14% moisture and approximately 1% lipid, ash and fiber. Apart from eating it on its own, rice can also be consumed in a wide variety of processed products such as noodle, cake, infant food, baking good and beer or wine. Rice-derived products are increasingly popular among consumers especially celiac patients.

Although rice product is suitable for celiac patients, it has its shortcoming as gluten that is found in wheat is not found in rice. The absence of gluten means that rice does not possess a cohesive dough structure and thereby depriving it of some of the versatilities found in wheat.

Further, the lack of gluten also causes rice products to have low post-cooking firmness, lack of elasticity, chewiness, and high in cooking loss. In order to overcome the processing difficulties and to improve the texture of rice products, hydrocolloid addition is often required. There were other attempts, for example introducing propylene glycol alginate (PGA) into the formulation of rice products, particularly acting as a stabilizer in noodle production. However, PGA is perceived as a "chemical" additive by the media and the consumer at large.

In addition, rice is has a relative high glycemic index (GI). GI is a measurement of the effect of carbohydrate on blood glucose concentration. When carbohydrate-containing food is being digested in the small intestine it will cause the level of blood glucose to rise. Food with high GI is rapidly digested and absorbed into the bloodstream. On the other hand, food that breaks down slowly and releases glucose gradually into the bloodstream has a low GI. Carbohydrate-containing foods are rated from a GI scale of 1 to 100. The highest GI value is 100, and that is akin to eating glucose in its pure form. High GI food refers to those with GI above 70, those with GI between 40 and 70 are generally considered to be moderate GI food and those with GI below 40 are categorised as low GI food.

When carbohydrate-containing food is consumed, the carbohydrate will be broken down into smaller units, thus allowing it to be absorbed into the bloodstream. Once absorbed into the bloodstream, human body will distribute it to the areas where it is needed for energy or it will be stored as glycogen. Glycogen, another polymer of glucose, is the polysaccharide used by human to store energy.

It is believed that high GI food will trigger an increased release of insulin into the bloodstream. Insulin is one of the hormones that play a role in regulating blood sugar levels by trying to maintain the blood sugar at a constant level. Hence, when too much glucose enters the bloodstream at a time, the body reacts by releasing more insulin in order to convert the excessive glucose into a form that can be stored by human body. However the effect of this process is that when the glucose that have been consumed, in the form of carbohydrates, is removed from the bloodstream, we will feel tired and hungry thereby creating craving for more carbohydrates. Thus a cycle is created, where we will eat more than that is necessary.

Consumption of high GI food is frequently associated with various health problems including insulin resistance, type II diabetes, obesity and coronary hearth disease.

On the other hand, low GI food releases glucose more slowly and steadily. Therefore, low GI food will slowly trickle glucose into the bloodstream and that keeps the energy level balanced and consistent. It also means that one feels full for longer time between meals.

There are more and more people in our society who pay closer attention to health issues and food that they consume everyday. However, as a result of busy and hectic lifestyle where more time is spent at work, people nowadays have less time to prepare healthy meals on their own. Therefore, the food industry is required and expected to provide not only convenient but, particularly, healthy choices of food. The current trend is to go for low fat, low salt and low carbohydrate content food. Hence, a slow rate of carbohydrate digestion that gives low glycemic and insulin responses are considered desirable for the general population at this time.

International Patent Application Nos. PCT/EP2007/059324, PCT/EP2007/059326 and PCT/EP2007/059329 describe processes for production of compounds, which are starch containing particles coated, embedded or encapsulated by a crosslinkable polysaccharide and the processes are carried out in a solution of Ca²⁺. The only difference in between PCT/EP2007/059324 and PCT/EP2007/059326 is that the latter further comprises a posthardening step to prevent the coating from disintegrated in the gastrointestinal track. Whereas, the only difference for PCT/EP2007/059329 as compared to the other two applications is that a mixture of biopolymers in multilayer arrangement is described in PCT/EP2007/059329. However, the compounds according to these documents are produced by either extrusion or emulsion where beads of compounds are produced by extruding a solution of starch and alginate into a calcium chloride bath for hardening. The hardened beads obtained from this process are then added into the food compositions. The food products that are obtainable from this system are mostly ready to eat foods such as snacks, candies, pudding, yoghurt, cereal, ice-cream, beverage and pasta products. Furthermore, no particular food system is studied in detail in any of these documents.

European Patent No. EP0749697 discloses the use of a cation cross-linked polysaccharide coating to reduce the glycemic response of carbohydrate-containing food. The method of this patent comprises coating a crosslinkable polysaccharide on a hydratable food core by boiling them and then hydrating the food core by cooking the coated food core in a solution of cations. This patent is suitable to be used for coating cooked food such as rice grains, pasta and ready to eat foods. It appears that this method is a coating process where a coating is applied to an end product. In order for the system of this patent to function effectively, the food to be coated should be relatively large.

EP0105100 discloses a method of making starch-based food noodles, by extrusion of cooked dough containing polysaccharide into a solution of gelling cation.

In view of the present trend, there is a need in the market to provide healthier rice products that have improved eating and processing properties. A PGA replacement is needed. There is also a need for a method that can produce a wider range of reduced GI value food products where such method is not limited to ready to eat food or by the size of the food to be coated.

### Summary of Invention

It is an object of the present invention to provide a food product which has a slow digestibility of starch granules and thus has a slow release of glucose into bloodstream.

Another object of the present invention is to provide a food product which has a slow digestibility of starch granules by setting a network externally with calcium cations and the network is capable of surviving high temperature and pressure without being destroyed during production or processing of the food products.

A further object of the present invention is to provide a rice-based food product having a reduced GI value being thus healthier for consumption.

Still, another object of the present invention is to provide a method to encapsulate the starch granules in food with a reaction compound formed by the chemical reaction of a crosslinkable alginate and a crosslinking calcium containing solution so that the GI value of the food product is reduced.

According to the present invention, the method of reducing the enzymatic digestion of starch granules in food comprising encapsulating the starch granules with a reaction compound, characterized in that the reaction compound is formed by the chemical reaction of at least a crosslinkable alginate pre-mixed with the food ingredients, and at least a crosslinking calcium containing solution, as set out in claim 1. This reaction compound retards the release of carbohydrate or starch granules into the digestive system and therefore reduces the glycemic response of the food.

The crosslinkable polysaccharide as used in the present invention is alginate.

The crosslinking agent used in the present invention comprises calcium. The cation sources are in liquid form and these sources include calcium chloride, calcium chloride anhydrous, calcium chloride dihydrate, calcium phosphate monobasic, calcium lactate. The most preferred solution for the present invention is calcium chloride. The method of preparing a food which has reduced enzymatic digestion rates comprises the steps of: i) mixing at least rice flour and tapioca starch to form a dry mix;
ii) adding alginate dissolved in water to the dry mix to form a dough;
iii) adding oil to the dough;
iv) kneading, sheeting and cutting the dough;
v) immersing the kneaded, sheeted and cutted dough in a calcium containing solution before boiling the dough.

### Brief description of drawings

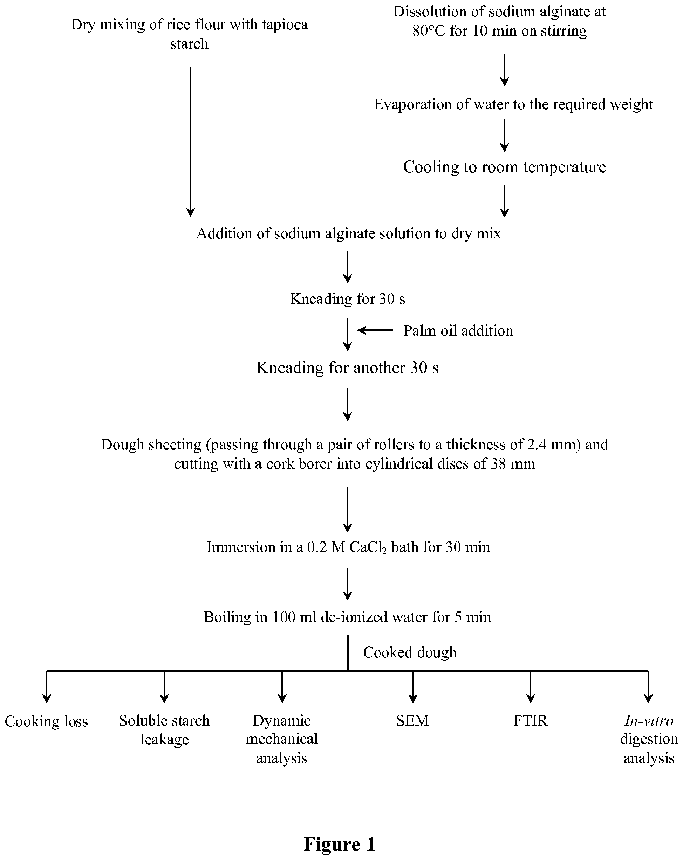

Figure 1 shows a flow chart of the experimental protocol used in the preparation and analysis of a model rice noodle.

### Detailed description of the preferred embodiments

The present invention relates to a method of reducing the enzymatic digestion of starch granules in food, particularly rice-based food, and more particularly rice noodle. Consumption of rice noodle including instant rice noodle in Asia is still increasing, especially in the non-traditional markets such as India. However, instant noodle with its high salt, high fat and high carbohydrate content, is generally perceived by the media and consumer groups in Asia as "unhealthy" food that goes against the market trend that promotes healthy lifestyle, with emphasis on disease prevention.

Unhealthy diet is a grave concern and diabetes is a major metabolic disorder in Asia. In Singapore, for example, according to the 1998 National Health Survey, among people aged between 18-64 years, the prevalence of diabetes and impaired glucose tolerance was approximately 9% and 15%, respectively. Since then, the number has been increasing and it has become a major health risk that results in cardiovascular disease in the region. The method of reducing the enzymatic digestion rates of starch granules in food comprising encapsulating starch granules with a reaction compound, characterized in that the reaction compound is formed by the chemical reaction of at least a crosslinkable alginate pre-mixed with the food ingredient, and at least a crosslinking calcium containing solution. According to this invention, the crosslinkable polysaccharide used is alginate. The crosslinkable polysaccharides used in the present invention should be in an amount that is sufficient to react with the cation to produce a network to encapsulate starch granules. Generally, the crosslinkable polysaccharide used is between 0.01% to 2.0% (w/w).

Alginate is a functional dietary fiber that may be considered as a valuable addition to rice based formulations. It is extracted from marine algae and contains 1→4 linked α-L-guluronic acid (G) and β-D-mannuronic acid (M) residues, which are interspersed as multiple MM, GG homopolymeric and MG heteropolymeric blocks.

The ability of alginate to perform in the present invention is dependent on the ratio and sequence of mannuronic acid (M-block) and guluronic acid (G-block) components of the alginate molecule. Alginates that are high in M-block regions are viscosity enhancer, while alginates high in G-block regions are network forming agent.

Therefore, it is preferable that the alginate used in the present invention has a pre-determined content and proportion of M-block and G-block. More preferably, the alginate as used in the present invention has M-block content of between 37% to 63% and viscosity of about 750 mPa s (for alginate solution in the concentration of 1%) and G-block content of between 37% to 63% and viscosity of about 440 mPa s (for alginate solution in the concentration of 1%). Clinical subjects supplemented with alginate containing diets experienced a reduction in plasma cholesterol concentration, blood peak glucose and plasma insulin rise (Brownlee *et al.,* 2005; Jimenez-Escrig & Sanchez-Muniz, 2000). These findings suggest that alginate is capable of preventing or minimising the risk of cardiovascular, heart and other degenerative diseases. Hence, the addition of alginate in the formulations of rice-based food products not only improves the cohesiveness of rice dough and thereby improving the texture as well as eating properties of the product, it also improves the properties of the food products from the health perspective.

The crosslinking agent of the present invention comprises calcium. The cation sources are in liquid form of any soluble salt and these sources include calcium chloride, calcium chloride anhydrous, calcium chloride dihydrate, calcium phosphate monobasic, calcium lactate. The most preferred solution for the present invention is calcium chloride.

The quantity of cations required is dependent on the type of cation used. The quantity should be sufficient to form a rigid or semi-rigid matrix. In the preferred embodiment, the concentration of elemental calcium that is being used to effectively crosslink the alginate and form a matrix is between 0.01% to 2.0% (w/w).

According to the present invention, the method of preparing a food which has a reduced rate of enzymatic digestion of starch granules comprises mixing the main ingredients of rice flour and tapioca starch to form a dry mix. The mixture may further comprise other appropriate ingredients. Meanwhile, alginate is dissolved in water, preferably it is dissolved in de-ionized water at a temperature between 75°C - 95°C. The solution is preferably left to cool to room temperature before use. The alginate solution is then added into the dry mix and mixed well to form a dough. Oil is then added to the dough and that would be followed by kneading. Thereafter, the dough is immersed in a calcium containing solution, preferably calcium chloride solution for about 5 to 30 minutes, preferably 5, 10, 20 or 30 minutes before boiling it for about 5 minutes in de-ionized water. Detailed schematic preparation of the dough in one embodiment of the present invention is illustrated in Figure 1.

Alginate network formation within the dough matrix is facilitated by the introduction of calcium ions externally by immersing the dough in calcium chloride solution. The dough prepared according to the method of the present invention has enhanced structural properties as alginate is capable of forming a continuous network suspending the starch granules in a coherent composite gel. Beside the obvious advantage of textural manipulation, it appears that such morphology is capable of retarding α-amylase digestion of the dough *in-vitro.*

The oil used in the present invention may be any vegetable oil or animal oil or fats. The preferred oil to be used is vegetable oil comprising palm oil, corn oil, canola oil, olive oil, safflower oil, sesame oil, sunflower oil and other vegetable oils.

The dough formulations with different content of mannuronic acid and guluronic acid in alginate are shown in the Table 1 and Table 2.

**Table 1: Various formulations for preparing dough of the present invention by using alginate solution with 61% of mannuronic acid and 39% of guluronic acid.**

| **Ingredients** | **Concentration (% w/w)** | | | | | |
|---|---|---|---|---|---|---|
| | **Control** | **0**.**2%** | **0.4%** | **0.6%** | **0.8%** | **1.0%** |
| Rice flour | 47.76 | 47.76 | 47.76 | 47.76 | 47.76 | 47.76 |
| Tapioca starch | 9.31 | 9.31 | 9.31 | 9.31 | 9.31 | 9.31 |
| Water | 40.93 | 40.83 | 40.53 | 40.33 | 40.13 | 39.93 |
| *Sodium alginate (Manuco1-HV) | 0.0 | 0.2 | 0.4 | 0.6 | 0.8 | 1.0 |
| Palm oil | 2 | 2 | 2 | 2 | 2 | 2 |

| | | | | | | |
|---|---|---|---|---|---|---|
| *Manucol-HV: 61% mannuronic acid and 39% guluronic acid | | | | | | |

**Table 2: Various formulations for preparing dough of the present invention by using alginate solution with 37% mannuronic acid and 63% guluronic acid.**

| **Ingredients** | **Concentration (% w/w)** | | | | | |
|---|---|---|---|---|---|---|
| | **Control** | **0.2%** | **0.4%** | **0.6%** | **0.8%** | **1.0%** |
| Rice flour | 47.76 | 47.76 | 47.76 | 47.76 | 47.76 | 47.76 |
| Tapioca starch | 9.31 | 9.31 | 9.31 | 9.31 | 9.31 | 9.31 |
| Water | 40.93 | 40.83 | 40.53 | 40.33 | 40.13 | 39.93 |
| *Sodium alginate (Manuge1-DPB) | 0.0 | 0.2 | 0.4 | 0.6 | 0.8 | 1.0 |
| Palm oil | 2 | 2 | 2 | 2 | 2 | 2 |

| | | | | | | |
|---|---|---|---|---|---|---|
| *Manugel-DPB: 37% mannuronic acid and 63% guluronic acid | | | | | | |

The present invention provides a food composition comprising a reduced enzymatic digestion rate prepared from the method described above. In this aspect, the food composition may be any kind of food products preferably rice-based food products such as rice noodles. The rice noodles can be of dry or soup-based instant noodles.

The present invention provides an alternative noodle composition to those found in the market. The noodle composition of the present invention is made without PGA thus avoiding the "chemical-additive" label that is frequently associated with the existing products in the market. Furthermore, studies show that the noodles produced from the dough as prepared according to the present invention possess superior quality in terms of overall appearance and textural profile. The studies also show that the noodle correlates directly with retarding α-amylase digestion *in-vitro* enzymatic.

Having described the invention in general terms, reference is now made to specific examples. It is to be understood that these examples are not meant to limit the invention, but merely to illustrate the invention specifically. All parts and percentages are based on the total weight of the composition unless otherwise specified.

### Example 1

A dry mix is first prepared by mixing 48.0% of rice flour and 9.0% of tapioca starch. Alginate is dissolved in de-ionized water with stirring at 95°C for 10 minutes. The solution is then cooled to 25°C and is added into the dry mix at concentrations of 0.2%. This is followed by the addition of and kneading with palm oil. The dough is sheeted by passing through a pair of rollers with 2.5 mm gap distance and cut by a cork borer into cylindrical discs of 38.0 mm diameter. The discs are immersed for 30 min in 50 ml of 0.2 M CaCl₂ solution at ambient temperature, which is then followed by boiling for 5 min in 100 ml of de-ionized water.

The above protocols are repeated for alginate solutions of 0.4%, 0.6%, 0.8% and 1.0%.

### Basic dough without alginate for comparison test

The basic dough formulation consists of 48.0% rice flour, 9.0% tapioca starch, 2.0% palm oil and 41% de-ionized water is prepared to serve as a model system for instant soup-based rice noodle available in the market.

Cooked dough with alginate and without alginate are tested for the following:
i). Soluble starch leakage and cooking loss
ii). Dynamic mechanical analysis
iii). Scanning Electron Microscopy (SEM)
iv). Fourier Transform Infrared Spectroscopy (FTIR)
v). In-vitro Starch Digestion

### i) Effect of alginate on starch leakage and cooking loss

The present investigation examines the structural properties of model rice-noodle formulations in the presence of alginate with distinct uronic acid composition. The aim was to utilize the alginate network set externally with calcium as an encapsulant of starch granules in dough. The ability of alginate to "cement" starch granules in a cohesive dough was evaluated by monitoring the cooking loss and the soluble starch leakage.

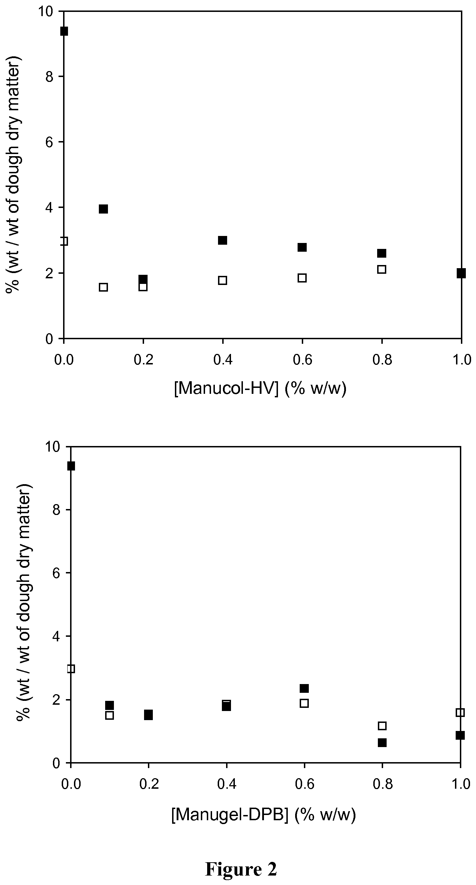

Figure 2 reproduces results on the quantity of solid particles (cooking loss) and soluble starch (amylose-like sequences) leached from the rice dough into water boiling for 5 min. In general, small additions of the polysaccharide to the formulation result in a significant reduction in both phenomena. Furthermore, Manugel-DPB outperforms Manucol-HV in terms of the cooking loss, with data being comparable regarding the starch leakage. In the presence of calcium ions, the greater guluronate content of the former should create a network of high density thus retarding mass transfer from the dough to the dialysate. Interestingly, alginate content of 0.1 to 0.2% is sufficient to curb material loses to a good degree, which remain constant at the upper range of polysaccharide concentration. Results strongly argue that a financially viable commercial product with increased likelihood of consumer acceptability can be engineered following this approach.

### ii) Mechanical Properties of Alginate Reinforced Rice Dough

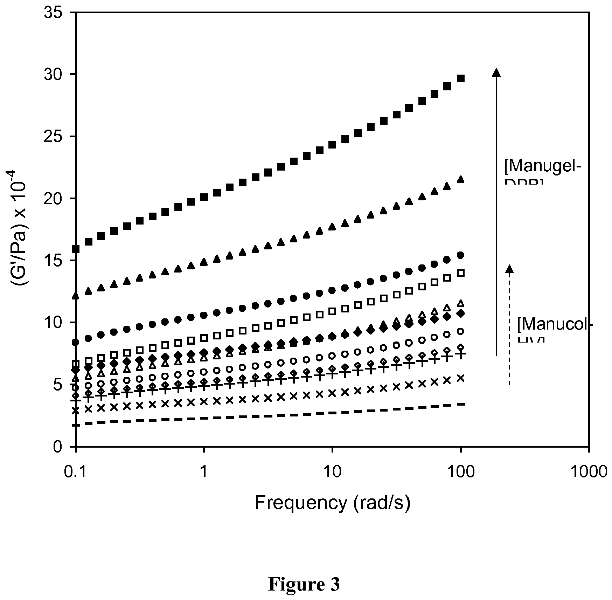

Further confirmation of the effect of alginate network on the structural properties of rice dough was obtained using small-deformation dynamic-oscillation on shear. The macromolecular approach evaluates in some detail the structural reinforcement of the composite gel containing two distinct types of the polysaccharide. Figure 3 demonstrates that there is a significant increase in the values of storage modulus (*G'*) in the presence of alginate, as compared to the basic dough formulation. For example, addition of 1.0% Manugel-DPB increases the network strength almost one order of magnitude from 34 to 296 kPa at the experimental frequency of 100 rad/s. It appears that the highly buckled two-folded conformation of polyguluronate sequences form efficient cross links with the divalent calcium cations (Atkins et al., 1973; Mackie et al., 1983), which serve as the knots of a three dimensional structure capable of holding the flour particles together during processing.

Manucol-HV, which is rich in polymannuronate sequences, functions mainly as viscosity enhancer hence its contribution to network strength is limited. At the earliest concentration of minimum starch leakage and cooking loss (0.2% alginate in Figure 2), the corresponding values of storage modulus are 55 kPa for Manucol-HV and 75 kPa for Manugel-DPB. It is interesting that the alginate supported rice-dough matrix survives the thermal treatment of 100°C for 5 min since this is comparable to steaming employed in commercial production lines.

### iii) Scanning Electron Microscopy

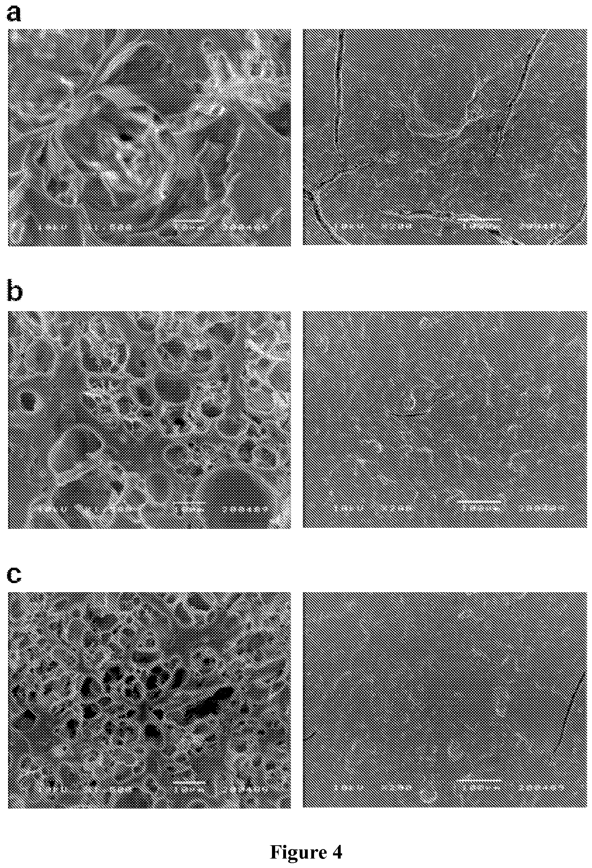

Tangible evidence of the dramatic transformation in the structure of rice dough by the addition of alginate emerges from scanning electron microscopy images. Figure 4 reproduces such micrographs for Manucol-HV, but similar arguments can be made for the SEM images of Manugel-DPB (not shown for the sake of brevity). In the absence of the polysaccharide, dough structural formation is primarily due to starch gelatinization and large pores are in view in Figure 4a (left). The granular starch morphology results in extremely brittle structures that crack readily on the surface (Figure 4a right). Alginate introduction to the system transforms the composite gel by forming a continuous and elastic phase capable of minimizing localized stress effects (Figure 4b left).

The ability to stretch reduces considerably the density of surface cracks (Figure 4b right), and this type of behaviour is more pronounced in the presence of 1.0% alginate in the formulation (Figure 4c left and right). Thickness of dough sheets (2.4 mm) was comparable to that of commercial embodiments and it seems that efficient calcium diffusion with a view to fully utilizing alginate is feasible *via* the external setting conditions of the present investigation (see Section on *Ingredients and Sample Preparation*). Formulation results in laminated dough sheets drawing structural characteristics from a fine balance of starch gelatinization and alginate cross-linking.

### iv) Fourier Transform Infrared Spectroscopy

Macromolecular considerations of the preceding section were complemented by a drive to identify the molecular interactions responsible for the physicochemical properties of the alginate "fortified" rice dough. This was pursued by Fourier Transform Infrared Spectroscopy, a technique that is able to follow the ion exchange in alginate from sodium to calcium salts. Such replacement in the vicinity of the polymeric chain results in alteration of the charge density and, of course, the radius and the atomic weight of the cation. The new counterion environment around the carboxyl group is seen as a peak shift in the FTIR spectrum. Two major variations in the spectrum are the shifting of the COO⁻ asymmetric stretching peak (1608-1611 cm⁻¹) and COO⁻ symmetric stretching peak (1413-1414 cm⁻¹) towards higher wavenumbers (Pongjanyakul & Puttipipatkhachorn, 2007). In addition, the OH⁻ stretching peak (3360-3380 cm⁻¹) becomes narrow and decreases in intensity with higher Ca²⁺ content owing to increasing intramolecular bonding (Sartori, Finch & Ralph, 1997).

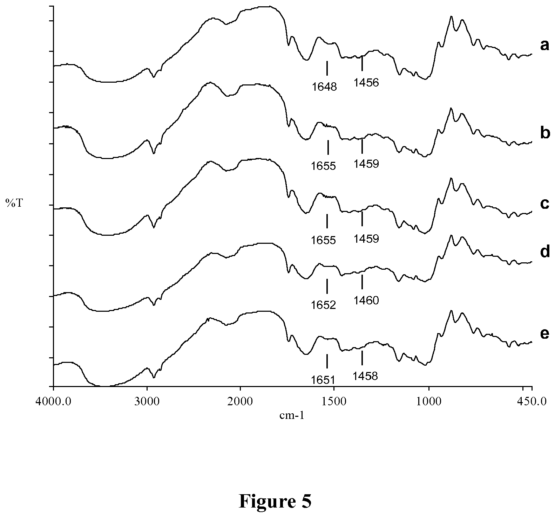

Figure 5 illustrates the FTIR spectra obtained for the basic dough formulation and in the presence of two concentrations of Manucol-HV and Manugel-DPB. Both COO⁻ asymmetric stretching peak and COO⁻ symmetric stretching peak reported presently lie at higher wavenumbers than for the literature. The latter were taken for pure alginate films or drug capsules with the excipient polysaccharide content being in excess of 60% w/w. In the absence of alginate, wavenumbers of 1648 and 1456 cm⁻¹ singled out in Figure 5a are attributable to carboxyl group oscillations of proteinaceous ingredients of the basic dough formulation. As the formulation was supplemented with alginate and Ca²⁺, both COO⁻asymmetric stretching peak and COO⁻ symmetric stretching peak indeed shifted reproducibly to higher wavenumbers, i.e., from 1648 to 1651-1655 cm⁻¹ and from 1456 to 1458-1460 cm⁻¹, respectively in Figures 5b to 5e. Moreover, the OH⁻ stretching peak became narrower for the alginate containing samples. Results indicate an ionic interaction between diffused Ca²⁺ and added alginate, which is found at relatively low concentrations (≤ 1.0%) in the model noodle formulation. The presence of high levels of starch may afford an interaction with proteins and alginate contributing to peak shifting in the recorded spectra.

### v) In-vitro Starch Digestion of Rice Dough in the Presence of Alginate

In addition to enhancing the structure of rice dough, alginate was assessed as a retardant to digestion of starch. Alginate is a non-digestive dietary fibre and, according to our work, its calcium induced cross-linking is capable of surviving high temperatures of sample preparation and processing. Furthermore, the ability to microencapsulate starch granules may serve as a physical barrier between the digestive enzymes and their substrate. Such an outcome would allow production of rice-dough based formulations with a reduced glycemic index (GI). *In-vitro* analysis of starch digestion can be implemented using -amylase and presently the enzyme was of a fugal source. In the human gastrointestinal track, α-amylase is excreted into the saliva and pancreatic juice, and catalyzes the random splitting of the α-1,4 glucosidic bonds of glucan except maltose. It is inhibited in the area of α-1,6 branching, with end products of amylolytic digestion being linear oligosaccharides with 2 to 3 glucose units as well as longer chain α-dextrins (Gray, 1992).

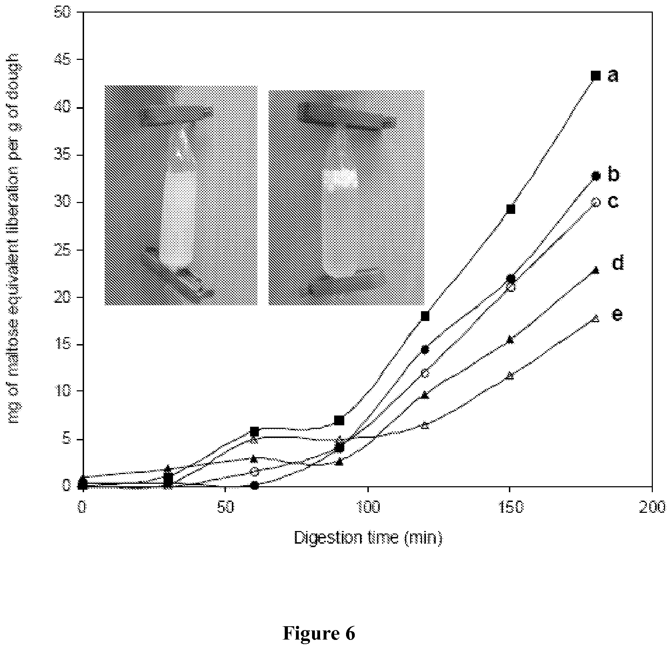

Line chart in Figure 6 depicts the amount of sugar in maltose equivalent liberated from samples of boiled dough during a digestion period of 3 hrs. Due to their low molecular weight, enzymolysates were able to migrate into the dialysate for subsequent quantification using the 3,5-DNSA assay described in the experimental part of this manuscript. Samples without alginate exhibit a rapid digestion rate, for example, 43.3 mg per g of dough at the end of experimentation (180 min) in Figure 6a. Comparable results were obtained in the presence of 0.6% Manucol-HV or Manugel-DPB, with liberated sugars reaching 33 and 30 mg per g of rice dough in Figures 6b and 6c, respectively. At 1.0% polymer addition, however, Manugel-DPB fares better (∼ 17.8 mg/g in Figure 6e) than Manucol-HV (∼ 23.0 mg/g in Figure 6d) due to the high guluronate content hence enhanced cohesiveness/barrier property of the former. Numerical observations are confirmed by the pictograph in Figure 6, which was taken at the end of the experiment. Thus, materials without alginate disintegrated giving rise to an opaque solution in the Visking tube. In contrast, counterparts supplemented with calcium cross-linked alginate were able to retain cohesion in the form of a swollen gel within the experimental timecourse of sampling and observation.

### v) Scaling-up to an End Product

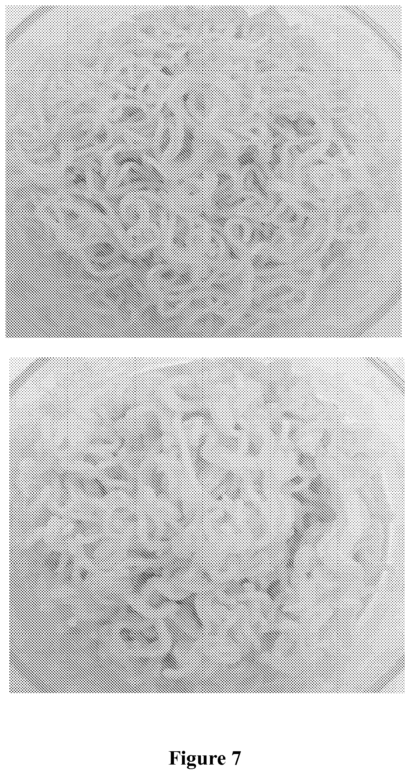

Fundamental understanding achieved in the laboratory was put to the test by preparing soup-based rice noodles in the pilot plant of the sponsoring company. Unlike wheat dough, the lack of gluten in rice causes rapid water evaporation and the formation of brittle structures that disintegrate readily. It was attempted to improve processability by supplementing the basic formulation with calcium cross-linked alginate. Processing steps in the pilot plant involved mixing of ingredients, dough sheeting and slitting, spraying of an appropriate calcium chloride solution onto the noodle surface, waiving and cutting of noodle strands, steaming, and frying in the desired commercial size portions. The outcome of industrial processing followed by treating the instant noodle in boiling water for 2 min is shown in Figure 7. Various combinations of alginate type and concentration with added calcium chloride were evaluated in terms of the final appearance and texture of the cooked noodle. The example in Figure 7 (top), which contains 0.6% Manugel-DPB, is made of long and distinctive strands with very acceptable eye appeal. In the absence of added alginate, however, a rather lumpy and sticky mass was obtained in Figure 7 (bottom). This material was also very soft and disintegrated in the soup hence being unsuitable for consumption. Product development work is on-going but for the moment the ability of the alginate containing rice noodle to deliver an acceptable organoleptic property following steaming, frying and boiling is extremely encouraging.

## Claims

1. A method of preparing a food which has a reduced rate of enzymatic digestion of starch granules comprising the steps of:
i) mixing at least rice flour and tapioca starch to form a dry mix;
ii) adding alginate dissolved in water to the dry mix to form a dough;
iii) adding oil to the dough;
iv) kneading, sheeting and cutting the dough;
v) immersing the kneaded, sheeted and cutted dough in a calcium containing solution before boiling the dough.

2. The method according to claim 1, wherein the alginate has a mannuronic acid content of between 37% to 63% and a guluronic acid content of between 37% to 63%.

3. The method according to claim 1 or 2, wherein the oil is selected from palm oil, corn oil, canola oil, olive oil, safflower oil, sesame oil or sunflower oil.

4. The method according to one of the above claims, wherein the calcium containing solution is a calcium chloride solution.

5. The method according to claim 4, wherein immersing the dough in the calcium chloride solution is for about 5 to 30 minutes.

6. The method according to one of the above claims, further comprising a step of boiling the dough after step v) for about 5 min in de-ionized water.

7. A food obtained by the method according to one of the preceding claims.

8. The food according to claim 7, wherein the starch granules are encapsulated by crosslinked alginate.

9. The food according to claim 7 or 8, wherein the food is a rice noodle.

10. The food according to claim 9, wherein the rice noodle is an instant rice noodle.

## Patentansprüche

1. Verfahren zum Zubereiten eines Nahrungsmittels, das eine reduzierte enzymatische Verdaurate von Stärkegranulat aufweist, die folgenden Schritte umfassend:
i) Mischen von mindestens Reismehl und Tapiokastärke, um eine trockene Mischung zu bilden;
ii) Hinzufügen von in Wasser gelöstem Alginat zu der trockenen Mischung, um einen Teig zu bilden;
iii) Hinzufügen von Öl zu dem Teig;
iv) Kneten, flaches Ausrollen und Schneiden des Teigs;
v) Eintauchen des gekneteten, flach ausgerollten und geschnittenen Teigs in eine calciumhaltige Lösung vor Kochen des Teigs.

2. Verfahren nach Anspruch 1, wobei das Alginat einen Mannuronsäuregehalt von zwischen 37 % und 63 % und einen Guluronsäuregehalt von zwischen 37 % und 63 % aufweist.

3. Verfahren nach Anspruch 1 oder 2, wobei das Öl ausgewählt ist aus Palmöl, Maisöl, Rapsöl, Olivenöl, Diestelöl, Sesamöl oder Sonnenblumenöl.

4. Verfahren nach einem der vorstehenden Ansprüche, wobei die calciumhaltige Lösung eine Calciumchloridlösung ist.

5. Verfahren nach Anspruch 4, wobei das Eintauchen des Teigs in die Calciumchloridlösung für etwa 5 bis 30 Minuten erfolgt.

6. Verfahren nach einem der vorstehenden Ansprüche, ferner umfassend einen Schritt des Kochens des Teigs für etwa 5 Minuten in entionisiertem Wasser nach Ausführen von Schritt v).

7. Nahrungsmittel, das durch das Verfahren nach einem der vorstehenden Ansprüche erhältlich ist.

8. Nahrungsmittel nach Anspruch 7, wobei das Stärkegranulat durch vernetztes Alginat eingekapselt ist.

9. Nahrungsmittel nach Anspruch 7 oder 8, wobei das Nahrungsmittel eine Reisnudel ist.

10. Nahrungsmittel nach Anspruch 9, wobei die Reisnudel eine Instant-Reisnudel ist.

## Revendications

1. Procédé de préparation d'un aliment qui présente un taux réduit de digestion enzymatique de granules d'amidon comprenant les étapes consistant à :
i) mélanger au moins de la farine de riz et de l'amidon de tapioca pour former un mélange sec ;
ii) ajouter de l'alginate dissous dans l'eau au mélange sec afin de former une pâte ;
iii) ajouter de l'huile à la pâte ;
iv) pétrir, abaisser et couper la pâte ;
v) immerger la pâte pétrie, abaissée et coupée dans une solution contenant du calcium avant de faire bouillir la pâte.

2. Procédé selon la revendication 1, dans lequel l'alginate a une teneur en acide mannuronique comprise entre 37 % et 63 % et une teneur en acide guluronique comprise entre 37 % et 63 %.

3. Procédé selon la revendication 1 ou 2, dans lequel l'huile est choisie parmi l'huile de palme, l'huile de maïs, l'huile de colza, l'huile d'olive, l'huile de carthame, l'huile de sésame ou l'huile de tournesol.

4. Procédé selon l'une des revendications précédentes, dans lequel la solution contenant du calcium est une solution de chlorure de calcium.

5. Procédé selon la revendication 4, dans lequel l'immersion de la pâte dans la solution de chlorure de calcium dure environ 5 à 30 minutes.

6. Procédé selon l'une des revendications précédentes, comprenant en outre une étape d'ébullition de la pâte après l'étape v) pendant environ 5 minutes dans de l'eau désionisée.

7. Aliment obtenu par le procédé selon l'une des revendications précédentes.

8. Aliment selon la revendication 7, dans lequel les granules d'amidon sont encapsulées par l'alginate réticulé.

9. Aliment selon la revendication 7 ou 8, dans lequel l'aliment est une nouille de riz.

10. Aliment selon la revendication 9, dans lequel la nouille de riz est une nouille de riz instantanée.
